# EUROPÄISCHE PATENTANMELDUNG

(11) **EP 4 786 026 A1**
(43) Veröffentlichungstag der Anmeldung: **05.08.2026**
(21) Anmeldenummer: 25225469.3
(22) Anmeldetag: 19.12.2025
(51) Int. Cl.: B01D 33/067, B29C 48/694, B29C 48/50

(54) **FILTERSIEB, ROHRFILTER, FILTEREINRICHTUNG UND HERSTELLVERFAHREN**

(30) Priorität: 30.01.2025 DE 202025100476 U
(71) Anmelder: Maag Ettlinger GmbH, 86343 Königsbrunn (DE)
(72) Erfinder: Ettlinger, Thorsten, 86830 Schwabmünchen (DE); Simmerlein, Rainer, 86343 Königsbrunn (DE)
(74) Vertreter: ERNICKE Patent- und Rechtsanwälte PartmbB

(57) **Zusammenfassung**

Die Erfindung betrifft ein Filtersieb (4) für einen Rohrfilter (2) zur Filterung von Flüssigkeiten, insbesondere Kunststoffschmelzen (24), wobei das rohrförmige, aus einem flachen Siebzuschnitt (19) gebogene Filtersieb (4) eine Filterachse (3), eine Siebwandung (11), und am Umfang der Siebwandung (11) einen Perforationsbereich (13) mit dicht gepackten, feinen Durchgangsöffnungen (14) sowie ein mit axialer Richtungskomponente ausgerichtetes Verbindungsmittel (17), insbesondere in Form einer Schweißnaht, aufweist. Der Perforationsbereich (13) weist in Umfangsrichtung an beiden Enden jeweils einen mit axialer Richtungskomponente erstreckten Bereichsrand (15) auf, wobei die Bereichsränder (15) jeweils unter Bildung eines Distanzbereichs (18) mit Abstand vor dem Verbindungsmittel (17) enden und wobei zumindest ein Bereichsrand (15) in seinem axialen Verlauf eine Profilgeometrie (16) mit variierenden Randabständen (a1,a2) von dem benachbarten Verbindungsmittel (17) aufweist. Die Profilgeometrie (16) hat in Umfangsrichtung gesehen eine Profiltiefe (t), die ein Vielfaches der Durchmesser der Durchgangsöffnungen (14) beträgt.

## Beschreibung

Die Erfindung betrifft ein Filtersieb, einen Rohrfilter, eine Filtereinrichtung und Herstellverfahren mit den Merkmalen im Oberbegriff der selbstständigen Ansprüche.

Die DE 10 2017 212 944 A1 zeigt ein kreiszylindrisches Dampfsieb für Schnellschlussventile einer Dampfturbine, bei dem mehrere gelochte und durch selektives Laserschmelzen hergestellte einzelne Siebsegmente in Umfangsrichtung mit Überlappung lose hintereinander angeordnet und mit stirnseitigen Stützringen verschraubt sind. Der Perforationsbereich mit Durchgangsöffnungen der Siebelemente hat jeweils in Umfangsrichtung einen geraden, axial erstreckten Bereichsrand.

Die KR 102564334 B1, KR 100992097 B1 und KR 100988217 B1 betreffen jeweils einen Rohrfilter für einen Platten-Wärmetauscher, wobei der gelochte kreiszylindrische Filtermantel auf einem innen liegenden spiralförmigen Filterträger durch Schweißen befestigt ist oder seine umfangseitigen Ränder überlappen und durch innenseitige Laschen befestigt sind oder die umfangseitigen Ränder distanziert und durch ein im Spalt eingesetztes elastisches Verbindungsmittel beweglich verbunden sind. Die Perforationsbereiche mit Durchgangsöffnungen haben in Umfangsrichtung jeweils einen geraden, axial erstreckten Bereichsrand.

Aus der WO 97/26973 A1 sind eine Filtereinrichtung, ein rohrförmiges Filterelement und ein Filtersieb sowie ein am Filtersieb angeordneter Abstreifer zum Abstreifen der Filterrückstände vom Filtersieb bekannt. Das Filtersieb ist aus einem flachen Siebzuschnitt bzw. Siebblech rund gebogen und weist eine Siebwandung mit einem Perforationsbereich aus dicht gepackten, feinen Durchgangsöffnungen in Form von Laserbohrungen auf. Das Siebblech bzw. die Siebwandung sind zu einem Hohlzylinder mit kreisförmigem Querschnitt, einem sog hohlen Kreiszylinder, zusammengefügt, was in der Praxis mittels einer axialen Schweißnaht geschieht. Der Perforationsbereich reicht in Umfangsrichtung beidseits bis zur Schweißnaht. Das Filtersieb und seine Siebwandung haben im Bereich der Schweißnaht und dem angrenzenden Perforationsbereich eine mechanische Schwachstelle.

Es ist Aufgabe der Erfindung, eine hinsichtlich der mechanischen Stabilität verbesserte Filtersiebtechnik aufzuzeigen.

Die Erfindung löst diese Aufgabe mit den Merkmalen in den selbstständigen Ansprüchen.

Die Filtersiebtechnik, d.h. das Filtersieb, der Siebzuschnitt, der Rohrfilter, die Filtereinrichtung, das Verfahren zur Herstellung eines Filtersiebs und die Verwendung des Filtersiebs, des Rohrfilters und der Filtereinrichtung zur Herstellung einer gefilterten Flüssigkeit, insbesondere Kunststoffschmelze, haben verschiedene Vorteile. Die Standfestigkeit, mechanische Stabilität und Effizienz des Filtersiebs, des damit ausgestatteten Rohrfilters und der Filtereinrichtung werden verbessert. Damit kann auch eine hohe und konstante Qualität der Filterung und der gefilterten Flüssigkeit, insbesondere Kunststoffschmelze, erzielt sowie Verschleiß bei der Filterung vermieden oder zumindest verringert werden.

Das Filtersieb mit den Merkmalen des Anspruchs 1 hat den Vorteil, dass die endseitigen, mit axialer Richtungskomponente erstreckten sowie in Umfangsrichtung gelegenen Bereichsränder des Perforationsbereichs in Umfangsrichtung gesehen mit einem Abstand vor dem Verbindungsmittel an der Verbindungsstelle enden. Der Perforationsbereich und die dortigen dicht gepackten feinen Durchgangsöffnungen sind dadurch in Umfangsrichtung vom Verbindungsmittel, z.B. einer Schweißnaht, distanziert. Der Distanzbereich kann anders als der Perforationsbereich ausgebildet sein. Er kann z.B. massiv ausgebildet sein. Zudem kann zumindest ein Bereichsrand in seinem axialen Verlauf eine Profilgeometrie mit variierenden Randabständen von dem benachbarten Verbindungsmittel aufweisen. Der profilierte Bereichsrand hat durch seine variierenden Randabstände in seinem Verlauf auch eine weitere Richtungskomponente, die quer zur Axialrichtung, insbesondere in Umfangsrichtung, weist.

Der Distanzbereich und die Profilgeometrie wirken sich günstig auf eine hohe mechanische Belastbarkeit und Standfestigkeit des Filtersiebs aus. Die gebogene Siebwand des Filtersiebs ist im Betrieb am gesamten Umfang einschließlich des Verbindungsmittelbereichs formstabil und maßhaltig. Dies ist auch für ein effizientes und belastungsarmes Ablösen, insbesondere Abstreifen, der Filterrückstände günstig. Das Verbindungsmittel und die gebogene Siebwand können bündig und glatt ineinander übergehen, zumindest an der von der Flüssigkeit, insbesondere Kunststoffschmelze, angeströmten Siebwandseite. Sie behindern dadurch nicht das Ablösen, insbesondere Abstreifen der Filterrückstände und wirken verschleißmindernd. Die hohe Maßhaltigkeit wirkt sich günstig auf die gleichmäßige und langfristige, hohe Filterungsqualität aus. Dies ist für flüssige, insbesondere ggf. auch zähflüssige, Flüssigkeiten, insbesondere Kunststoffschmelzen, besonders vorteilhaft.

Das beanspruchte Filtersieb kann mit dem beanspruchten Verfahren hergestellt werden. Das Filtersieb kann ein eigenständiges Produkt sein. Es kann an einem Rohrfilter und einer Filtereinrichtung in der Erstausstattung vorhanden sein. Es kann auch an einem Rohrfilter und einer Filtereinrichtung nachgerüstet oder umgerüstet werden, insbesondere im Austausch gegen ein anderes vorhandenes Filtersieb.

Das Filtersieb, der Rohrfilter und die Filtereinrichtung sind zur Filterung von Flüssigkeiten, insbesondere von Kunststoffschmelzen, ausgebildet. Das Filtersieb, aber auch der Rohrfilter und die Filtereinrichtung, können zur Herstellung gefilterter Flüssigkeiten, insbesondere Kunststoffschmelzen, verwendet werden.

Der Perforationsbereich und dessen dicht gepackte feine Durchgangsöffnungen können entsprechend an die ggf. unterschiedlichen Eigenschaften der zu filternden Flüssigkeiten, insbesondere Kunststoffschmelzen, in ihrer Größe, Ausbildung und Anordnung angepasst sein.

Das Filtersieb ist bevorzugt aus einem flachen Siebzuschnitt gebogen, insbesondere rund, bevorzugt kreisrund, gebogen. Dessen in Umfangsrichtung gelegene und mit einer axialen Richtungskomponente ausgerichteten Ränder stoßen an einer Verbindungsstelle bzw. einer sog. Fügestelle bevorzugt in einem stumpfen Stoß zusammen und können durch das Verbindungsmittel fest miteinander verbunden werden. Statt einer Schweißnaht ist auch ein anderes mit axialer Richtungskomponente ausgerichtetes stoffliches Verbindungsmittel, z.B. eine Klebenaht, möglich.

Die in den Ansprüchen und in der nachfolgenden Beschreibung genannte axiale Ausrichtung bezieht sich auf die Filterachse des gebogenen Filtersiebs bzw. des Rohrfilters. Dies kann z.B. die Zentralachse eines bevorzugt hohlen kreiszylindrischen Filtersiebs sein. Das Filtersieb kann auch eine andere Rohrform haben, z.B. in Form eines hohlen Kegelstumpfs. Die bevorzugt kreisrunde Querschnittsform kann ebenfalls variieren. Eine hohle kreiszylindrische Form ist z.B. für ein um die Filterachse drehendes Filtersieb von Vorteil. Ein stationäres Filtersieb kann auch eine andere, z.B. ovale oder prismatische, Querschnittsform haben. Der Siebzuschnitt kann dementsprechend anders gebogen werden.

Die genannte axiale Richtungskomponente des Verbindungsmittels und/oder des Bereichsrands und/oder der Zuschnittsränder kann eine exakt axiale Ausrichtung umfassen. Es kann auch eine weitere überlagerte Richtungskomponente, z.B. in Umfangsrichtung, vorhanden sein. Hierdurch kann sich z.B. eine schräge bzw. schraubenlinienförmige Erstreckung ergeben.

Die Profilgeometrie kann unterschiedliche Ausgestaltungen haben. Sie kann z.B. mindestens eine zum Verbindungsmittel hinweisende Ausbuchtung aufweisen. Sie kann alternativ oder zusätzlich mindestens eine vom Verbindungsmittel wegweisende Einbuchtung aufweisen. Diese Ausbuchtung und/oder Einbuchtung kann jeweils einzeln oder mehrfach vorhanden sein. Im Bereich einer Ausbuchtung und/oder Einbuchtung kann der profilierte Bereichsrand eine der axialen Richtungskomponente überlagerte weitere und andere Richtungskomponente, insbesondere in Umfangsrichtung, aufweisen. Im Bereich einer Ausbuchtung und/oder Einbuchtung kann sich der Bereichsrand quer oder schräg zur Filterachse erstrecken. Dies erhöht die mechanische Festigkeit in diesem Bereich.

In einer vorteilhaften Ausgestaltung sind mehrere Ausbuchtungen und mehrere Einbuchtungen vorhanden, die z.B. einander in direkter Folge oder in anderer Weise abwechseln. Hierbei kann eine Periode vorhanden sein. Auf eine Ausbuchtung kann direkt eine Einbuchtung folgen usw.. In Variation dazu können bei einer anderen Wechselfolge z.B. zwei oder mehr Ausbuchtungen aufeinander folgen, wobei dann eine oder mehrere Einbuchtungen anschließen usw..

Die Ausbuchtung(en) und Einbauchtung(en) können jeweils in Umfangsrichtung des Filtersiebs zum Verbindungsmittel hinweisen oder vom Verbindungsmittel wegweisen.

In einer vorteilhaften Ausgestaltung können in einer zum Verbindungsmittel hinweisenden Ausbuchtung des Bereichsrands eine Mehrzahl der besagten Durchgangsöffnungen in Umfangsrichtung hintereinander und nebeneinander angeordnet sein. Im Bereich einer vom Verbindungsmittel wegweisenden Einbuchtung können die besagten Durchgangsöffnungen fehlen. Hier kann die Siebwandung z.B. massiv ausgebildet sein. Der Distanzbereich kann sich bis in eine Einbuchtung erstrecken.

Eine vorteilhafte Ausgestaltung sieht vor, dass die Profilgeometrie in Umfangsrichtung gesehen eine Profiltiefe (t) aufweist, die ein Vielfaches der Durchmesser der Durchgangsöffnungen beträgt. Die Profiltiefe (t) kann sich auf die quer zum axialen Verlauf des Bereichsrands erstreckende Richtung, insbesondere die Umfangsrichtung, beziehen. Die Profiltiefe (t) kann z.B. den Abstand in Umfangsrichtung zwischen den Zeniten von Ausbuchtung(en) und Einbuchtung(en) betreffen. Dies kann auch als Amplitude von seitlichen Abweichungen des profilierten Bereichsrands von der axialen Erstreckung verstanden werden.

Der profilierte Bereichsrand des Perforationsbereichs kann somit signifikante Änderungen, insbesondere quer oder schräg gerichtete Abweichungen, von seiner axialen Erstreckung haben.

Eine signifikante Profilgeometrie hat sich als besonders vorteilhaft für die Standfestigkeit des Filtersiebs gezeigt.

Die genannte Profilgeometrie kann an nur einem oder an beiden in Umfangsrichtung gelegenen Bereichsrändern des Perforationsbereichs vorhanden sein. Der Perforationsbereich selbst kann zwischen den besagten Bereichsrändern durchgängig vorhanden sein. Er kann alternativ auch ein oder mehrere Unterbrechungen aufweisen, die z.B. von im wesentlichen massiven Bereichen der Siebwandung gebildet werden können. Der Perforationsbereich kann sich in Axialrichtung bis zum gebogenen Siebrand des Filtersiebs erstrecken oder kann an einer oder beiden Seiten mit Abstand davor enden. Im Abstandsbereich kann die Siebwandung wiederum massiv ausgebildet sein.

Für die Formgestaltung der Profilgeometrie gibt es verschiedene Möglichkeiten. Die Profilgeometrie kann z.B. eine Wellenform mit mehreren zum benachbarten Verbindungsmittel hinweisenden Ausbuchtungen und mehreren vom Verbindungsmittel wegweisenden Einbuchtungen aufweisen. Die Wellenform kann mäandrieren.

Die Wellenform kann z.B. gleichmäßig ausgebildet sein. Dies kann sich auf gleiche Formgebungen und/oder gleiche Größen von Ausbuchtungen und Einbuchtungen beziehen. Zudem kann eine Periode in der abwechselnden Anordnung von Ausbuchtungen und Einbuchtungen vorhanden sein. Alternativ ist eine ungleichmäßige Wellenform möglich, bei der z.B. die Ausbuchtungen und die Einbuchtungen unterschiedliche Größen und ggf. unterschiedliche Formen haben können.

Die Profilgeometrie kann gerundete oder eckige Ausbuchtung(en) und/oder Einbuchtung(en) umfassen. Eine Mischung von gerundeten und eckigen Formen ist ebenfalls möglich. Eine eckige Ausbildung kann z.B. pfeilartig spitz bzw. dreieckig oder zinnenartig in Rechteckform gestaltet sein. Insbesondere ist es auch möglich, dass die Profilgeometrie eines Bereichsrands nur eine einzelne und bevorzugt gerundete Ausbuchtung oder nur eine einzelne, bevorzugt gerundete, Einbuchtung aufweist. Eine solche einzelne Ausbuchtung oder Einbuchtung kann sich über die gesamte Länge des betreffenden Bereichsrands erstrecken.

Ferner ist es möglich, dass die Profilgeometrie eines Bereichsrands in ihrem Verlauf auch ein oder mehrere axiale und gerade Abschnitte umfasst. Eine Ausbuchtung und eine benachbarte Einbuchtung können direkt ineinander übergehen. Sie können auch axial voneinander distanziert und z.B. durch einen geraden und axialen Verlaufsabschnitt der Profilgeometrie verbunden sein. Eine andere mögliche Ausgestaltung der Wellenform kann nur Ausbuchtungen oder nur Einbuchtungen umfassen, zwischen den jeweils ein axialer und gerader Abschnitt angeordnet ist.

Ferner ist es möglich, dass Ausbuchtungen und Einbuchtungen einander in beliebiger Weise abwechseln, insbesondere unter Einfügung eines evtl. geraden und axialen Verlaufsabschnitts der Profilgeometrie. Zusammenfassend sind eine Vielzahl unterschiedlicher Ausgestaltungen der Profilgeometrie möglich. Über die vorgenannten Beispiele hinaus sind weitere Varianten möglich.

Der Distanzbereich zwischen dem mindestens einen Bereichsrand und dem Verbindungsmittel kann massiv ausgebildet sein. Die massive Ausbildung kann auch kleinere Durchbrechungen und/oder nutartige Ausnehmungen an der Siebwandung im Distanzbereich einschließen.

Die Siebwandung kann in einer vorteilhaften Ausgestaltung eine Dicke zwischen 1,0 mm und 2,0 mm aufweisen.

Die Durchgangsöffnungen im Perforationsbereich und in der Siebwandung können jeweils einen Durchmesser zwischen 30 µm und 1.500 µm aufweisen. Bevorzugt wird ein Durchmesser zwischen 60 µm und 1.000 µm.

Die Durchgangsöffnungen können eine beliebige Querschnittsform aufweisen, z.B. kreisrund oder prismatisch. Die Durchgangsöffnungen können untereinander gleich oder unterschiedlich ausgebildet sein.

Die Durchgangsöffnungen können im Perforationsbereich in beliebiger Weise angeordnet sein. Sie können untereinander durch Siebwandstege getrennt sein. Die Durchgangsöffnungen können z.B. in einer Vielzahl von Reihen und Spalten angeordnet sein, z.B. in einer regelmäßigen, bevorzugt rechtwinkligen Matrix. Benachbarte Reihen oder Spalten von Durchgangsöffnungen können auch auf Lücke gesetzt sein. Die Packungsdichte der Durchgangsöffnungen kann im Perforationsbereich überall gleich sein. Ferner sind unregelmäßige Verteilungen und auch unterschiedliche Packungsdichten von Durchgangsöffnungen möglich, die bzw. lokal variieren.

Die Durchgangsöffnungen durchsetzen die Siebwandung. Ihre Form und Ausrichtung kann unterschiedlich sein. Sie können z.B. eine über die Länge gleiche Querschnittsform oder eine konische Form haben. Die Durchgangsöffnungen können orthogonal zur Siebwandungsoberfläche ausgerichtet sein. Sie können beim gebogenen, insbesondere hohlen kreiszylindrischen, Filtersieb, radial bezogen auf die Filterachse ausgerichtet sein. In Abwandlung können ein oder mehrere Durchgangsöffnungen auch eine schräge Ausrichtung haben.

Die Verbindungsstelle und das Verbindungsmittel können in einer vorteilhaften Ausgestaltung eine gerade und axial ausgerichtete Linienform aufweisen. Von der exakten axialen Ausrichtung kann abgewichen werden. Die Verbindungsstelle und das Verbindungsmittel können dabei eine weitere, z.B. in Umfangsrichtung weisende, Richtungskomponente haben. Die Verbindungsstelle und das Verbindungsmittel können dadurch einen z.B. schraubenförmigen Verlauf haben. Das Verbindungsmittel kann eine durchgängige Linienform haben. Es kann auch eine unterbrochene Linienform besitzen. Ansonsten sind andere Formgestaltungen der Verbindungsstelle und des Verbindungsmittels möglich. Statt einer Schweißnaht kann ein anderes stoffliches Verbindungsmittel vorhanden sein, z.B. eine Klebenaht oder etwas anderes.

Die Siebwandung kann aus einem ebenen, biegeelastischen Metallblech gebildet sein. Die Siebwandung bzw. das Metallblech kann die besagte flache Form haben. Die Breitseiten können parallel zueinander ausgerichtet sein. Der Werkstoff des Metallblechs ist wählbar. Er kann an die Erfordernisse des zu filternden Fluids angepasst sein. Das Metallblech kann z.B. aus Stahl, insbesondere Edelstahl, aus Messing oder dergleichen gebildet sein.

Die Durchgangsöffnungen in der Siebwandung können mittels einer Strahlentechnologie gebildet sein. Ansonsten sind andere Techniken zur Einbringung der Durchgangsöffnungen möglich, z.B. spanendes Bohren, Stanzen, Ätzen oder dgl..

In einer vorteilhaften Ausgestaltung des Filtersiebs können Zuschnittsränder des gebogenen Siebzuschnitts in Umfangsrichtung am Verbindungsmittel stumpf gestoßen sein. Diese Zuschnittsränder bilden die in Umfangsrichtung gelegenen Ränder der Siebwandung. Hier können sich die Verbindungsstelle und das Verbindungsmittel befinden.

Die Erfindung umfasst auch einen Siebzuschnitt. Dieser kann zur Bildung der Siebwandung eines gebogenen Filtersiebs für einen Rohrfilter ausgestaltet sein. Der Siebzuschnitt kann flach und biegeelastisch ausgebildet sein und kann einen besagten Perforationsbereich mit Durchgangsöffnungen und Bereichsrändern aufweisen. Dieser Siebzuschnitt kann gemäß der vorgenannten Ausgestaltung des Filtersiebs und seiner Siebwandung ausgebildet sein.

Beim Siebzuschnitt können die Bereichsränder des Perforationsbereichs jeweils mit Abstand vor einem benachbarten Zuschnittsrand enden. Diese Zuschnittsränder sind später beim Biegen des Siebzuschnitts zum Filtersieb mit der besagten axialen Richtungskomponente ausgerichtet. Beim Siebzuschnitt können die besagten Zuschnittsränder z.B. von jeweils einem Querrand eines z.B. länglichen Siebzuschnitts gebildet werden. Die anderen und z.B. quer zum Bereichsrand ausgerichteten Zuschnittsränder können die Längsränder des Siebzuschnitts sein. Sie können beim gebogenen Siebfilter den jeweiligen stirnseitigen, gerundeten Siebrand bilden.

Der Siebzuschnitt kann als bevorzugt flaches, rechteckiges, ebenes und biegeelastisches Metallblech ausgebildet sein. Dies kann eine Ausbildung in der vorbeschriebenen Art haben. Der Siebzuschnitt kann ansonsten die vorstehend zur Siebwandung genannten Ausgestaltungen haben, z.B. die besagte Dicke, die Durchmesser der Durchgangsöffnungen etc..

Die Erfindung umfasst auch den besagten Rohrfilter. Dieser kann ebenfalls ein eigenständiges Produkt sein und kann zur Erstausrüstung, Nachrüstung oder Umrüstung einer Filtereinrichtung dienen. Der Rohrfilter ist mit einem z.B. hohlen kreiszylindrischen Filtersieb und dessen vorgenannten Ausgestaltungen ausgestattet. Ein Rohrfilter kann auch mehrere der besagten Filtersiebe aufweisen. Der Rohrfilter kann außerdem einen Filterträger umfassen, an dem das Filtersieb angeordnet ist. Dies kann bevorzugt eine umfangsseitige Anordnung, insbesondere an der Außenseite des z.B. kreiszylindrischen Filterträgers, sein. Der Filterträger kann seinerseits für die zu filternde Flüssigkeit, insbesondere Kunststoffschmelze, durchlässig sein. Das Filtersieb kann am Filterträger austauschbar und lösbar angeordnet und befestigt werden.

In einer vorteilhaften Ausgestaltung kann der Filterträger als rotierfähige Filterwelle ausgebildet sein. Das Filtersieb kann auf der rotierfähigen Filterwelle angeordnet sein und kann im Filterbetrieb von dieser gedreht werden. Der Filterträger und das Filtersieb können gesteuert rotatorisch angetrieben sein. Sie können eine übereinstimmende, bevorzugt zentrale Filterachse haben.

Die Erfindung umfasst auch die besagte Filtereinrichtung. Diese ist mit einem rohrförmigen, insbesondere hohlen kreiszylindrischen Filtersieb ausgestattet, welches in der vorbeschriebenen Art ausgebildet sein kann. Desgleichen kann auch der Rohrfilter in der vorgenannten Art ausgebildet sein.

Die Filtereinrichtung kann einen Abstreifer für die Filterrückstände aufweisen. Der Abstreifer kann außenseitig oder innenseitig am Umfang des rohrförmigen Filtersiebs angeordnet sein. Der Abstreifer kann z.B. mit seiner Wirklinie axial, insbesondere parallel, zur Filterachse, ausgerichtet sein. Er kann alternativ auch eine schräge, ggf. auch schraubenförmige, Ausrichtung haben. Der Abstreifer kann stationär oder beweglich und zustellbar angeordnet sein. Die Filtereinrichtung kann ferner eine mit dem Abstreifer zusammenwirkende Austragvorrichtung für die abgestreiften Filterrückstände aufweisen. Diese kann die Filterrückstände intermittierend und dosiert austragen.

Die Filtereinrichtung kann ansonsten eine Filterkammer mit einem Zulauf und einem Ablauf für die zu filternde Flüssigkeit, insbesondere eine Kunststoffschmelze aufweisen. Das Filtersieb kann stationär oder beweglich, insbesondere rotierend angetrieben, in der Filterkammer angeordnet und mit dem Zulauf sowie dem Ablauf verbunden sein. Die zu filternde Flüssigkeit, insbesondere Kunststoffschmelze, kann das Filtersieb von außen nach innen durchströmen, wobei der innere Hohlraum des Filtersiebs und ggf. eines Filterträgers mit dem Ablauf verbunden ist. Die Zuordnung kann auch umgedreht sein.

Die Erfindung umfasst auch ein Verfahren zur Herstellung des beanspruchten Filtersiebs. Die Erfindung betrifft zudem eine Verwendung des beanspruchten Filtersiebs zur Herstellung einer gefilterten Flüssigkeit, insbesondere Kunststoffschmelze. Die besagte Verwendung kann auch den Rohrfilter und/oder die Filtereinrichtung betreffen.

In den Unteransprüchen sind weitere vorteilhafte Ausgestaltungen der Erfindung angegeben.

Die beschriebenen und beanspruchten Vorrichtungsmerkmale des Filtersiebs, des Rohrfilters, des Siebzuschnitts und der Filtereinrichtung können mit Vorteil beim beanspruchten Verfahren eingesetzt werden. Umgekehrt können auch die beschriebenen und beanspruchten Verfahrensmerkmale in vorteilhafter Weise bei der/den beanspruchten Vorrichtung(en) eingesetzt werden. Die Verfahrens- und Vorrichtungsmerkmale sind somit untereinander austauschbar.

Die beanspruchte Vorrichtungen Filtersieb, Siebzuschnitt, Rohrfilter und Filtereinrichtung sowie die beanspruchten Verfahren können jeweils folgende weitere Merkmale umfassen, die jeweils einzeln oder in beliebiger Kombination einsetzbar sind.

Der Perforationsbereich kann eine Profilgeometrie mit einer bevorzugt gleichmäßigen, insbesondere mäandrierenden, Wellenform aufweisen.

Der Perforationsbereich kann eine Profilgeometrie mit Ausbuchtung(en) und/oder Einbuchtung(en) aufweisen, die jeweils eine gerundete und/oder eckige Form haben können.

Der Distanzbereich zwischen dem Bereichsrand des Perforationsbereichs und dem Verbindungsmittel und auch der Verbindungsstelle kann massiv ausgebildet sein.

Die Durchgangsöffnungen des Perforationsbereichs können mittels Strahlentechnologie gebildet sein oder gebildet werden.

Das Verbindungsmittel kann eine gerade und axial ausgerichtete Linienform aufweisen. Die Verbindungsstelle kann ebenfalls eine solche Linienform aufweisen.

Die Siebwandung des Filtersiebs kann vom Siebzuschnitt gebildet sein oder gebildet werden.

Der Siebzuschnitt kann nach dem bevorzugt runden, insbesondere kreisrunden, Biegen an einer Verbindungsstelle mit einem Verbindungsmittel, insbesondere einer Schweißnaht, versehen werden.

Die in Umfangsrichtung gelegenen, mit einer axialen Richtungskomponente ausgerichteten Ränder des bevorzugt rund gebogenen, insbesondere kreisrund gebogenen, Siebzuschnitts können an einer bevorzugt geraden Verbindungsstelle miteinander stumpf gestoßen und mit einem Verbindungsmittel, insbesondere einer Schweißnaht, verbunden werden.

Die Bereichsränder des Perforationsbereichs können jeweils mit Abstand vor einem benachbarten Zuschnittsrand, insbesondere einem Querrand, des Siebzuschnitts enden.

Der Filterträger des Rohrfilters kann als rotierfähige Filterwelle ausgebildet sein.

Die Filtereinrichtung kann eine mit einem Abstreifer zusammenwirkende Austragvorrichtung für abgestreifte Filterrückstände aufweisen.

Die Filtereinrichtung kann eine Filterkammer mit einem Zulauf und einem Ablauf für die zu filternde Flüssigkeit, insbesondere Kunststoffschmelze, aufweisen. Das Filtersieb kann stationär oder beweglich, insbesondere rotierend angetrieben, in der Filterkammer angeordnet und mit dem Zulauf sowie dem Ablauf verbunden sein.

Bei der Herstellung einer gefilterten Flüssigkeit, insbesondere Kunststoffschmelze, unter Verwendung des beanspruchten Filtersiebs kann dem Filtersieb eine mit herausfilterbaren Partikeln behaftete rohe Flüssigkeit, insbesondere Kunststoffschmelze, zugeführt und nach Durchströmen des Filtersiebs als gefilterte Flüssigkeit, insbesondere Kunststoffschmelze, vom Filtersieb abgeführt werden. Die herausgefilterten und am Filtersieb als Filterrückstände abgelagerten Partikel können vom Filtersieb abgelöst, insbesondere abgestreift, und ausgetragen werden.

Die Erfindung ist in den Zeichnungen beispielhaft und schematisch dargestellt. Im einzelnen zeigen:
- Figur 1:: ein Filtersieb in einer perspektivischen Ansicht,
- Figur 2:: einen Ausschnitt der Siebwandung sowie eines Siebzuschnitts an der Verbindungsstelle mit einem Verbindungsmittel und einem Perforationsbereich mit profilierten umfangseitigen Bereichsrändern,
- Figur 3:: eine vergrößerte Detaildarstellung der Profilgeometrie des Bereichsrands am Verbindungsmittel,
- Figur 4 bis 8:: verschiedene Varianten in der Gestaltung der Profilgeometrie des Bereichsrands des Perforationsbereichs,
- Figur 9:: einen abgebrochenen Querschnitt durch die Siebwandung bzw. den Siebzuschnitt und verschiedene Gestaltungsvarianten einer Durchgangsöffnung des Perforationsbereichs,
- Figur 10:: einen Siebzuschnitt zur Bildung des Filtersiebs von Figur 1 in Draufsicht,
- Figur 10a:: den Siebzuschnitt von Figur 10 in geklappter Seitenansicht,
- Figur 11:: eine Filtereinrichtung mit einem Rohrfilter und dem Filtersieb in einer geschnittenen Seitenansicht und
- Figur 12:: einen Querschnitt der Filtereinrichtung gemäß Schnittlinie XII - XII von Figur 11.

Die Erfindung betrifft ein Filtersieb (4), einen Siebzuschnitt (19), einen Rohrfilter (2), eine Filtereinrichtung (1) sowie ein Verfahren zur Herstellung eines Filtersiebs (4) und eine Verwendung des Filtersiebs (4) zur Herstellung von gefilterten Flüssigkeiten, insbesondere Kunststoffschmelzen (24).

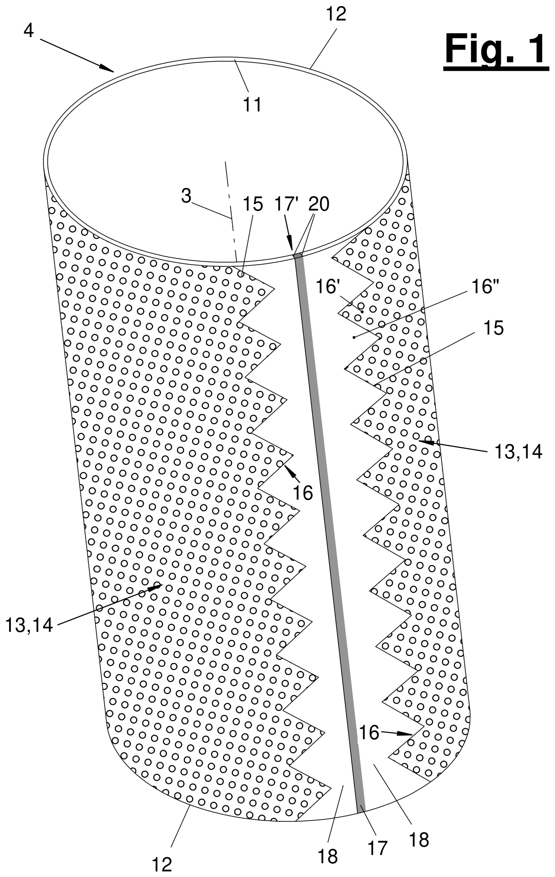

Figur 1 zeigt das rohrförmige, z.B. hohle kreiszylindrische, Filtersieb (4) in einer perspektivischen Darstellung. Das Filtersieb (4) ist aus einem flachen Siebzuschnitt (19) bevorzugt rund, insbesondere kreisrund, gebogen und weist eine Filterachse sowie eine Siebwandung (11) auf. Am Umfang weist die gebogene Siebwandung (11) einen Perforationsbereich (13) mit dicht gepackten, feinen Durchgangsöffnungen (14) auf.

An diesem Umfang ist auch ein mit axialer Richtungskomponente ausgerichtetes Verbindungsmittel (17) angeordnet. Mit diesem werden die in Umfangsrichtung zusammenstoßenden Ränder der Siebwandung (11), insbesondere die Zuschnittsränder (20) des Siebzuschnitts (19), miteinander fest verbunden. Das Verbindungsmittel (17) ist z.B. als Schweißnaht ausgebildet. Es hat in den Ausführungsbeispielen eine gerade und bezüglich der Filterachse (3) axiale Ausrichtung. Alternativ ist eine andere, z.B. schraubenförmige, Erstreckung des bevorzugt linienförmigen Verbindungsmittels (17) möglich. In Figur 1 sind die Durchgangsöffnungen (14) des Perforationsbereichs (13) der Übersicht halber nur an der Außenseite der Siebwandung (11) dargestellt. Sie sind außerdem schematisiert und zur besseren Erkennbarkeit mit Übergröße dargestellt.

Der Perforationsbereich (13) weist gemäß Figur 1 in Umfangsrichtung an beiden Enden jeweils einen Bereichsrand (15) auf, der sich mit einer axialen Richtungskomponente erstreckt. Die Bereichsränder (15) enden jeweils mit Abstand in Umfangsrichtung vor dem Verbindungsmittel (17). Hierbei wird an der Siebwandung (11) ein Distanzbereich (18) gebildet. Im Distanzbereich (18) fehlen die Durchgangsbohrungen (14) des Perforationsbereichs (13). Der Distanzbereich (18) ist z.B. massiv ausgebildet. Er kann aber auch vereinzelte Durchbrechung oder nutenartige Ausnehmungen haben.

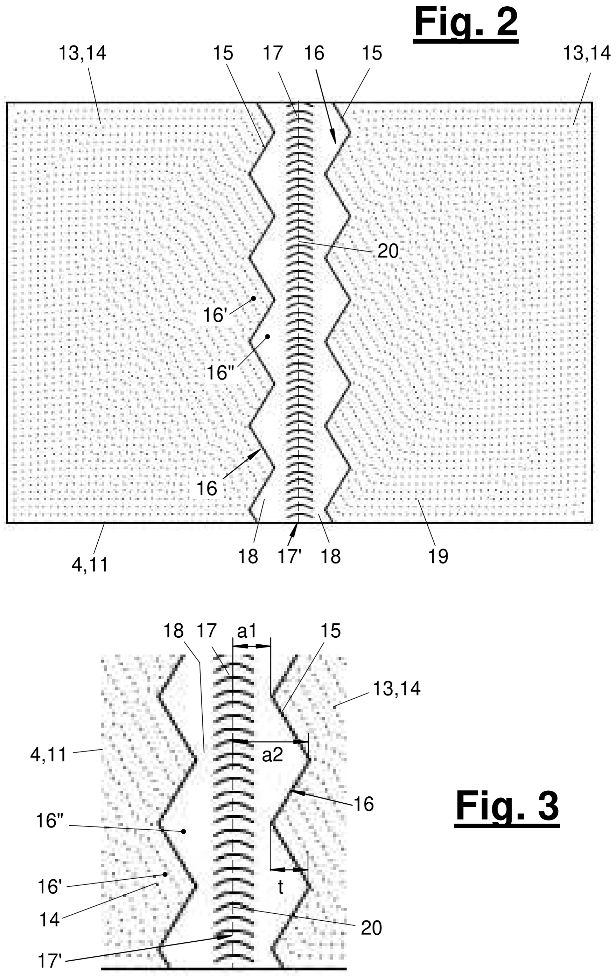

Zumindest ein Bereichsrand (15) weist in seinem axialen Verlauf eine Profilgeometrie (16) mit variierenden Randabständen (a1,a2) des Bereichsrands (15) von dem benachbarten Verbindungsmittel (17) auf. Figur 3 verdeutlicht in einer Detailansicht die in Umfangsrichtung weisenden Randabstände (a1,a2).

Die Profilgeometrie (16) kann unterschiedlich ausgebildet sein. Figur 2-8 zeigen hierzu verschiedene Varianten. In Figur 2-8 weist die Profilgeometrie (16) mehrere zum Verbindungsmittel (17) hinweisende Ausbuchtungen (16') und mehrere vom Verbindungsmittel (17) wegweisende Einbuchungen (16") auf. In den zum Verbindungsmittel (17) in Umfangsrichtung hinweisenden Ausbuchtungen (16') sind jeweils mehrere Durchgangsöffnungen (14) angeordnet. Dabei sind gemäß Fig. 1-8 jeweils mehrere Durchgangsöffnungen (14) in Umfangsrichtung hintereinander und nebeneinander angeordnet.

Wie Figur 3 verdeutlicht, hat die Profilgeometrie (16) eine Profiltiefe (t), die ein Vielfaches der Durchmesser der Durchgangsöffnungen (14) beträgt. Die Profiltiefe (t) ist in Umfangsrichtung des Filtersiebs (4) gerichtet und stellt in den gezeigten Ausführungsbeispielen den Abstand zwischen den Zeniten der Ausbuchtungen (16') und der Einbuchtungen (16") dar. Der Distanzbereich (18) reicht bis in die Einbuchtungen (16").

Die Profilgeometrie (16) hat z.B. eine in Figur 1-8 dargestellte Wellenform mit mehreren in Umfangsrichtung zum Verbindungsmittel (17) hinweisenden Ausbuchtungen (16') und mehreren vom Verbindungsmittel (17) wegweisenden Einbuchtungen (16"). Hierbei wechseln Ausbuchtungen (16') und Einbuchtungen (16") z.B. in jeweils direkter Folge miteinander ab. Die Formgebung und Größen der Ausbuchtungen (16') und Einbuchtungen (16") sind untereinander z.B. gleich. Die Ausführungsbeispiele geben eine bevorzugte gleichmäßige Wellenform der Profilgeometrie (16) wieder. Alternativ sind die vorstehend angesprochenen anderen und ungleichmäßigen Ausführungsformen von Profilgeometrien (16) möglich.

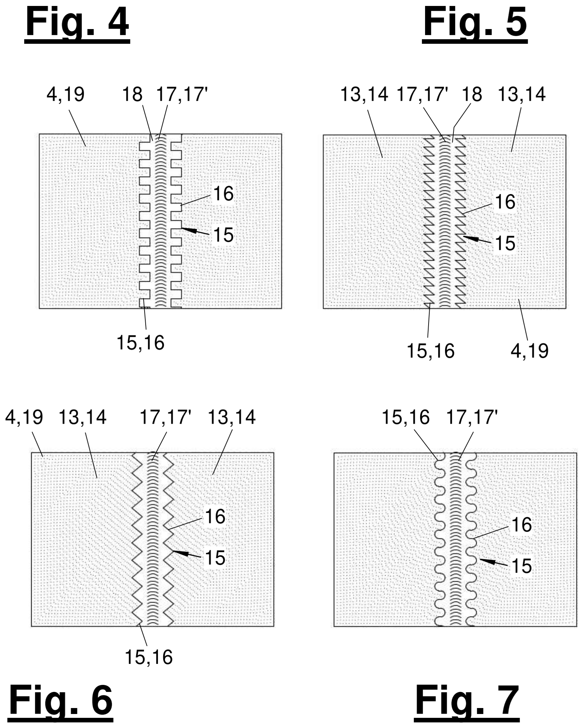

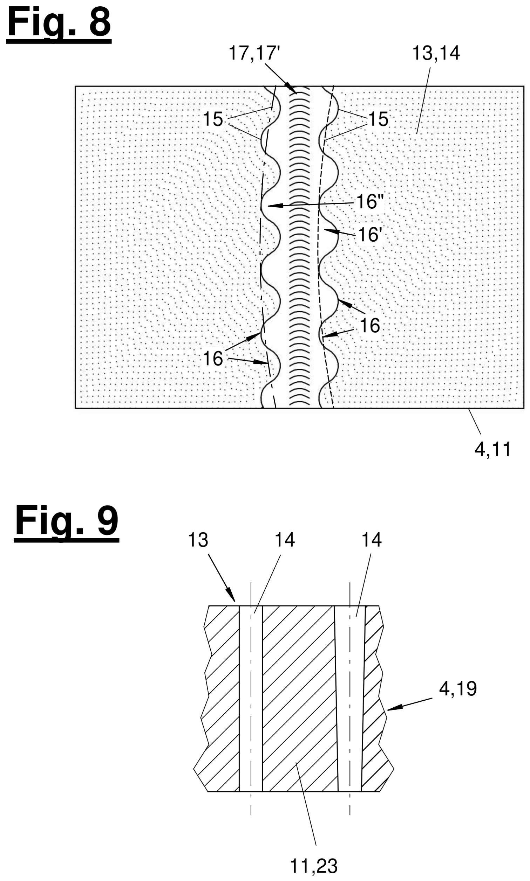

In den Ausführungsbeispielen von Figur 1-6 haben die Profilgeometrien (16) jeweils eckige Ausbuchtungen (16') und Einbuchtungen (16"). Diese sind in Figur 2, 5 und 6 pfeilförmig spitz bzw. dreieckig ausgestaltet. Figur 4 zeigt eine zinnenartige Profilgeometrie mit rechteckigen Ausbuchtungen (16') und Einbuchtungen (16"). Figur 7 und 8 zeigen Varianten mit einer gerundeten Formgebung der Ausbuchtungen (16') und Einbuchtungen (16"). Wie die Zeichnungen verdeutlichen, kann es auch Variationen in der Zahl und Größe der hintereinander aufgereihten Ausbuchtungen (16') und Einbuchtungen (16") geben.

Figur 8 verdeutlicht außerdem eine gestrichelt dargestellte Variante der Profilgeometrie (16) mit nur einer bevorzugt gerundeten Ausbuchtung (16') und/oder nur einer bevorzugt gerundeten Einbuchtung (16"). Hierbei können z.B. beide Bereichsränder (15) jeweils eine einzelne Ausbuchtung (16') oder jeweils eine einzelne Einbuchtung (16") aufweisen. Dabei ergeben sich ebenfalls die vorgenannten veränderlichen Randabstände (a1,a2) und die Profiltiefe (t) der Profilgeometrie (16), z.B. als Amplitude der seitlichen Abweichungen des profilierten Bereichsrands (15) der einzelnen Ausbuchtung (16') oder Einbuchtung (16") von seiner axialen Erstreckung.

Figur 9 zeigt beispielhaft einen Ausschnitt aus der Siebwandung (11) bzw. des Siebzuschnitts (19) mit unterschiedlichen Ausgestaltungsmöglichkeiten für eine Durchgangsöffnung (14). Die Durchgangsöffnungen (14) sind z.B. orthogonal zur Außenseite der Siebwandung (11) bzw. des Siebzuschnitts (19) ausgerichtet. Beim gebogenen Filtersieb (4) sind sie z.B. radial zur Filterachse (3) ausgerichtet.

Die in der linken Bildhälfte gezeigte Durchgangsöffnung (14) hat einen über ihre Länge gleichbleibenden Querschnitt. Die Öffnungsform kann zylindrisch sein. Die andere gezeigte Durchgangsbohrung (14) hat z.B. eine Konusform. Diese kann sich z.B. zur Außenseite der Siebwandung (11) hin verjüngen. Die Außenseite kann z.B. die Anströmseite für die Filterung sein.

Die Durchgangsöffnungen (14) können eine z.B. kreisrunde Querschnittsform aufweisen. Die Querschnittsgeometrie kann über die Länge der Durchgangsbohrung (14) gleichbleiben oder kann variieren. Alternativ sind andere Querschnittsformen, z.B. oval, prismatisch etc. möglich.

Der Siebzuschnitt (19) und die hieraus gebildete Siebwandung (11) können vorteilhafter Weise eine Dicke zwischen 1,0 mm und 2,0 mm aufweisen.

Die Durchgangsöffnungen (14) können z.B. jeweils einen Durchmesser zwischen 30 µm und 1.500 µm aufweisen. Bevorzugt ist ein Durchmesser zwischen 60 µm und 1.000 µm.

Die Durchgangsöffnungen (14) sind im Siebzuschnitt (19) bzw. in der Siebwandung (11) mittels einer Strahlentechnologie gebildet, z.B. durch Strahlbohren.

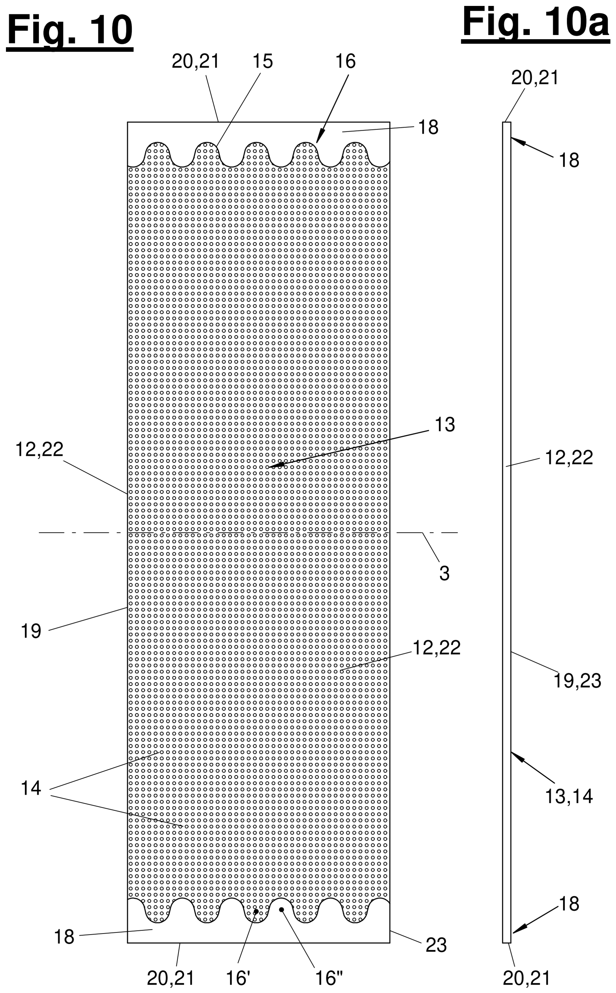

Figur 10 und 10a zeigen in der Draufsicht und der geklappten Seitenansicht einen flachen und ebenen Siebzuschnitt (19) mit einer bevorzugt quaderartigen Form, aus dem dann durch bevorzugt rundes, insbesondere kreisrundes, Biegen das in Figur 1, 11 und 12 gezeigte Filtersieb (4) und dessen bevorzugt kreiszylindrische Siebwandung (11) gebildet werden. Dabei sind an der Verbindungsstelle (17') bzw. am Verbindungsmittel (17) die bevorzugt geraden Zuschnittsränder (20) des gebogenen Siebzuschnitts (19) in Umfangsrichtung stumpf gestoßen. Figur 1 und 2 zeigen diesen stumpfen Stoß, die Verbindungsstelle (17') und das dort angebrachte Verbindungsmittel (17), insbesondere die Schweißnaht. Die Zuschnittsränder (20) haben z.B. eine ebene Form und liegen z.B. an dermit bevorzugt vollflächigem Kontakt plan aneinander, wobei dann das Verbindungsmittel (17), z.B. die Schweißnaht, an der Verbindungsstelle (17') angebracht wird.

In den gezeigten Ausführungsbeispielen hat das Verbindungsmittel (17) eine gerade und axial ausgerichtete Linienform. Alternativ kann das Verbindungsmittel (17) auch einen von der axialen Ausrichtung abweichenden, z.B. schraubenförmigen, Verlauf haben. Die Verbindungsstelle (17') kann eine entsprechende Linienform und einen entsprechenden Verlauf haben.

Desgleichen haben auch die ein oder beiden Bereichsränder (15) in den gezeigten Ausführungsbeispielen eine im wesentlichen axiale globale Ausrichtung. Die Verbindungslinien zwischen den Zeniten der Ausbuchtungen (16') und auch zwischen den Zeniten der Einbuchtungen (16") haben ebenfalls eine gerade und axiale Ausrichtung.

In Variation hierzu kann ebenfalls von der streng axialen Ausrichtung abgewichen werden. Der axialen Richtungskomponente kann eine andere und weitere Richtungskomponente, insbesondere in Umfangsrichtung, überlagert werden. Hierdurch kann sich z.B. ein schraubenlinienförmiger Verlauf der Bereichsränder (15) und ihrer Profilgeometrie (16) ergeben.

Die Siebzuschnitte (19) sowie die aus dem gebogenen Siebzuschnitt (19) gebildete Siebwandung (11) sind jeweils aus einem flachen, ebenen und biegeelastischen Metallblech (23) ausgebildet. Das Metall kann z.B. Edelstahl oder Messing oder ein anderes Metall sein.

Der Siebzuschnitt (19) hat z.B. die in Figur 10 und 10a gezeigte längliche und in Draufsicht sowie Seitenansicht rechteckige Form. Er weist Längsränder (22) und kürzere Querränder (21) auf. Der Siebzuschnitt (19) wird z.B. zur Bildung des Filtersiebs (4) z.B. über die Längsränder (22) und die in Fig. 10 angedeutete Filter- und Biegeachse (3) gebogen. Die Querränder (21) bilden z.B. bei der gebogenen Siebwandung (11) die in Umfangsrichtung gelegenen und an der Verbindungsstelle (17') stumpf gestoßenen Zuschnittsränder (20). Die Längsränder (22) bilden die stirnseitigen Siebränder (12) des Filtersiebs (4). In anderen Ausführungen kann der Siebzuschnitt (19) eine andere, z.B. quadratische oder rautenartige, Form haben. Er kann ggf. auch über die kürzeren Querränder (21) gebogen werden.

Wie Figur 1 und 10 verdeutlichen, kann der Perforationsbereich (13) in Axialrichtung bis zu ein oder beiden Längsrändern (22) bzw. bis zu den hiervon am gebogenen Filtersieb (4) gebildeten stirnseitigen Siebrand/Siebrändern (12) reichen. Alternativ kann der Perforationsbereich (13) mit axialem Abstand vor einem oder beiden Längsrändern (22) bzw. Siebrändern (12) enden.

In Figur 10 sind die Durchgangsöffnungen (14) ebenfalls schematisch und zur besseren Erkennbarkeit vergrößert dargestellt. Die Form und Verteilung der Durchgangsöffnungen (14) ist beispielhaft dargestellt, z.B. in Form einer regelmäßigen und rechtwinkligen Matrix, in der die Durchgangsöffnungen (14) jeweils in mehreren geraden Reihen und Spalten angeordnet sind. Alternativ ist eine jeweils auf Lücke gesetzte Anordnung benachbarter Reihen von Durchgangsöffnungen (14) möglich. Ferner kann es auch beliebige andere Anordnungen und Verteilungen von Durchgangsöffnungen (14) im Perforationsbereich (13) geben.

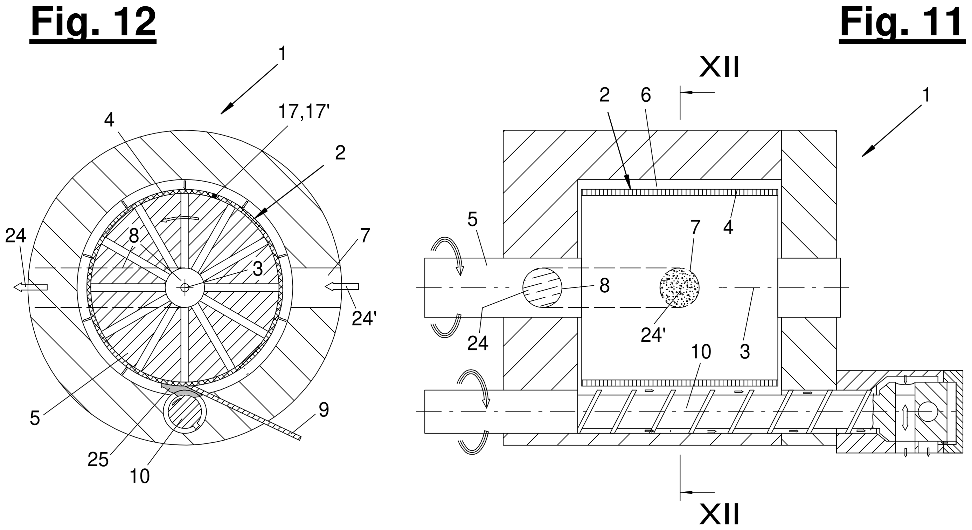

Figur 11 und 12 zeigen eine Filtereinrichtung (1) mit einem Rohrfilter (2) und einem dort angeordneten Filtersieb (4) nebst Filterachse (3), einem Abstreifer (9) und einer Austragvorrichtung (10). Das einzeln oder mehrfach vorhandene Filtersieb (4) ist z.B. auf dem Außenumfang eines zylindrischen Filterträgers (5) angeordnet. Der Filterträger (5) kann die im Querschnitt von Figur 12 gezeigte für die zu filternde Flüssigkeit, insbesondere eine Kunststoffschmelze (24,24'), durchlässige Form haben. Der Filterträger (5) ist z.B. als Hohlkörper mit mehreren radialen und zum außenseitigen Filtersieb (4) reichenden Bohrungen ausgestattet, die an einer zentralen Bohrung münden.

Die Filtereinrichtung (1) umfasst z.B. ein Gehäuse, in dem eine Filterkammer (6) ausgebildet ist, an der ein Zulauf (7) für die zu filternde rohe, partikelbehaftete Flüssigkeit, insbesondere Kunststoffschmelze (24'), beispielsweise umfangseitig mündet. In der Filterkammer (6) sind der Filterträger (5) und das Filtersieb (4) angeordnet. Die zugeführte rohe partikelbehaftete Flüssigkeit, insbesondere Kunststoffschmelze (24'), strömt durch das Filtersieb (4) sowie dessen Perforationsbereich (13) mit den Durchgangsöffnungen (14), wobei die Partikel herausgefiltert und als Filterrückstände (25) am Filtersieb (4) abgeschieden werden. Die gefilterte Flüssigkeit, insbesondere Kunststoffschmelze (24), wird dann vom Filtersieb (4) abgeführt.

Der Filterträger (5) ist z.B. als drehbare Filterwelle ausgebildet, die von einem nicht dargestellten Antrieb bevorzugt steuerbar rotierend angetrieben werden kann. Ein Ablauf (8) für die gefilterte Flüssigkeit, insbesondere Kunststoffschmelze (24), kann aus dem Innenraum des hohlen kreiszylindrischen Filtersiebs (4) und des Filterträgers (5) herausgeführt sein. Er kann z.B. über den Wellenfortsatz der Filterwelle nach außen geführt sein.

In der gezeigten Darstellung wird das Filtersieb (4) von außen nach innen von der zu filternden rohen Flüssigkeit, insbesondere Kunststoffschmelze (24'), durchströmt. Alternativ ist eine umgekehrte Anordnung möglich, bei der der Siebfilter (4) von innen nach außen durchströmt wird, wobei der Zulauf (7) in den hohlen Innenraum des Filtersiebs (4) und des Filterträgers (5) reicht und der Ablauf (8) am Filtergehäuse nach außen geführt ist. Figur 1 verdeutlicht außerdem die Möglichkeit, das Filtergehäuse und die darin ausgebildete Filterkammer (6) stirnseitig durch einen abnehmbaren Deckel zu verschließen. Das Filtersieb (4) kann dadurch bedarfsweise ausgetauscht werden.

Der z.B. klingenartig ausgebildete Abstreifer (9) wirkt bei der gezeigten Ausführungsform auf den Außenumfang des Filtersiebs (4) ein und schabt die dort anhaftenden Filterrückstände (25) bei einer Filterdrehung ab. Der Abstreifer (9) ist z.B. stationär angeordnet. Er kann mit seiner Wirkseite, insbesondere der Streiferklinge, axial und parallel zur Filterachse (3) ausgerichtet sein. Im Bereich des Abstreifers (9) ist auch eine bevorzugt steuerbare Austragvorrichtung (10) angeordnet, welche die abgeschabten und am Abstreifer (9) gesammelten Filterrückstände (25) kontinuierlich oder intermittierend abführt. Die Austragvorrichtung (10) umfasst z.B. eine schneckenartige Förderwelle, die sich parallel zur Filterachse und Drehachse (3) erstreckt und durch Drehung die Filterrückstände (25) axial abfördert. Sie kann dabei am Schneckenende in einem Austragsraum münden, in dem ein dosierter Querauslass über einen radialen Aufnahmekanal und einen dort angeordneten oszillierend beweglichen Stößel im Wellenzapfen erfolgen kann. Der Abstreifer (9) und die Austragvorrichtung (10) können z.B. gemäß der WO 2022/135855 A1 ausgebildet sein.

Abwandlungen der gezeigten und beschriebenen Ausführungsform sind in verschiedener Weise möglich.

Die in den Figuren gezeigten Filtersieb (4), Rohrfilter (2) und Filtereinrichtung (1) sowie Siebzuschnitt (19) können in der in der Beschreibungseinleitung genannten Weise abgewandelt werden. Die Merkmale dieser Ausführungsbeispiele und Abwandlungen können dabei im Rahmen der Ansprüche auch miteinander vertauscht werden.

### BEZUGSZEICHENLISTE

- 1: Filtereinrichtung
- 2: Filter, Rohrfilter
- 3: Filterachse
- 4: Filtersieb
- 5: Filterträger, Filterwelle
- 6: Filterkammer
- 7: Zulauf
- 8: Ablauf
- 9: Abstreifer
- 10: Austragvorrichtung
- 11: Siebwandung
- 12: Siebrand
- 13: Perforationsbereich
- 14: Durchgangsöffnung
- 15: Bereichsrand des Perforationsbereichs
- 16: Profilgeometrie
- 16': Ausbuchtung
- 16": Einbuchtung
- 17: Verbindungsmittel, Schweißnaht
- 17': Verbindungsstelle, Fügestelle
- 18: Distanzbereich
- 19: Siebzuschnitt
- 20: Zuschnittsrand
- 21: Querrand
- 22: Längsrand
- 23: Metallblech
- 24: Flüssigkeit, Kunststoffschmelze gefiltert
- 24': Flüssigkeit, Kunststoffschmelze roh
- 25: Filterrückstand
- a1: Abstand
- a2: Abstand
- t: Profiltiefe

## Patentansprüche

1. Filtersieb für einen Rohrfilter (2), ausgebildet zur Filterung von Flüssigkeiten, insbesondere Kunststoffschmelzen (24), wobei das rohrförmige, insbesondere hohle kreiszylindrische, aus einem flachen Siebzuschnitt (19) gebogene Filtersieb (4) eine Filterachse (3), eine Siebwandung (11), und am Umfang der Siebwandung (11) einen Perforationsbereich (13) mit dicht gepackten, feinen Durchgangsöffnungen (14) sowie ein mit axialer Richtungskomponente ausgerichtetes Verbindungsmittel (17), insbesondere in Form einer Schweißnaht, aufweist, **dadurch gekennzeichnet, dass** der Perforationsbereich (13) in Umfangsrichtung an beiden Enden jeweils einen mit axialer Richtungskomponente erstreckten Bereichsrand (15) aufweist, wobei die Bereichsränder (15) jeweils unter Bildung eines Distanzbereichs (18) mit Abstand vor dem Verbindungsmittel (17) enden und wobei zumindest ein Bereichsrand (15) in seinem axialen Verlauf eine Profilgeometrie (16) mit variierenden Randabständen (a1,a2) von dem benachbarten Verbindungsmittel (17) aufweist, wobei die Profilgeometrie (16) in Umfangsrichtung gesehen eine Profiltiefe (t) aufweist, die ein Vielfaches der Durchmesser der Durchgangsöffnungen (14) beträgt.

2. Filtersieb nach Anspruch 1, **dadurch**
**gekennzeichnet, dass** die Profilgeometrie (16) mindestens eine zum Verbindungsmittel (17) hin weisende Ausbuchtung (16') und/oder mindestens eine vom Verbindungsmittel (17) weg weisende Einbuchtung (16") aufweist.

3. Filtersieb nach Anspruch 1 oder 2, **dadurch**
**gekennzeichnet, dass** in einer zum Verbindungsmittel (17) hin weisenden Ausbuchtung (16') mehrere Durchgangsöffnungen (14) in Umfangsrichtung hintereinander und nebeneinander angeordnet sind.

4. Filtersieb nach einem der vorhergehenden Ansprüche, **dadurch gekennzeichnet, dass** die Profilgeometrie (16) eine bevorzugt gleichmäßige, insbesondere mäandrierende, Wellenform mit mehreren zum Verbindungsmittel (17) hin weisenden Ausbuchtungen (16') und mehreren vom Verbindungsmittel (17) weg weisende Einbuchtungen (16") aufweist, wobei bevorzugt die Profilgeometrie (16) gerundete und/oder eckige Ausbuchtung(en) (16') und/oder Einbuchtung(en) (16") aufweist und wobei bevorzugt der Distanzbereich (18) zwischen dem Bereichsrand (15) und dem Verbindungsmittel (17) massiv ausgebildet ist.

5. Filtersieb nach einem der vorhergehenden Ansprüche, **dadurch gekennzeichnet, dass** die Siebwandung (11) eine Dicke zwischen 1,0 mm und 2,0 mm aufweist, wobei bevorzugt die Durchgangsöffnungen (14) jeweils einen Durchmesser zwischen 30 µm und 1.500 µm, bevorzugt zwischen 60 µm und 1.000 µmm, aufweisen.

6. Filtersieb nach einem der vorhergehenden Ansprüche, **dadurch gekennzeichnet, dass** die Siebwandung (11) aus einem ebenen, biegeelastischen Metallblech (23) ausgebildet ist.

7. Filtersieb nach einem der vorhergehenden Ansprüche, **dadurch gekennzeichnet, dass** am Verbindungsmittel (17) in Umfangsrichtung bevorzugt gerade Zuschnittsränder (20) des gebogenen Siebzuschnitts (19) stumpf gestoßen sind.

8. Siebzuschnitt ausgestaltet zur Bildung der Siebwandung (11) eines gebogenen Filtersiebs (4) für einen Rohrfilter (2), **dadurch**
**gekennzeichnet, dass** der flach und biegeelastisch ausgebildete Siebzuschnitt (19) einen Perforationsbereich (13) mit Durchgangsöffnungen (14) und Bereichsrändern (15) aufweist, der gemäß einem der Ansprüche 1 bis 7 ausgebildet ist.

9. Siebzuschnitt nach Anspruch 8, **dadurch**
**gekennzeichnet, dass** der Siebzuschnitt (19) als bevorzugt rechteckiges, ebenes, biegeelastisches Metallblech (23) ausgebildet ist.

10. Rohrfilter ausgebildet zur Filterung von Flüssigkeiten, insbesondere Kunststoffschmelzen (24), mit einem Filtersieb (4), **dadurch**
**gekennzeichnet, dass** das Filtersieb (4) nach einem der Ansprüche 1 bis 7 ausgebildet ist.

11. Rohrfilter nach Anspruch 10, **dadurch**
**gekennzeichnet, dass** der Rohrfilter (2) einen Filterträger (5) umfasst, an dem das Filtersieb (4) bevorzugt umfangseitig angeordnet ist, wobei bevorzugt der Filterträger (5) als rotierfähige Filterwelle ausgebildet ist.

12. Filtereinrichtung ausgebildet zur Filterung von Flüssigkeiten, insbesondere Kunststoffschmelzen (24), wobei die Filtereinrichtung (1) einen Rohrfilter (2) mit einem rohrförmigen, insbesondere hohlen kreiszylindrischen, Filtersieb (4) aufweist, **dadurch gekennzeichnet, dass** das Filtersieb (4) nach einem der Ansprüche 1 bis 7 und der Rohrfilter (2) nach einem der Ansprüche 10 oder 11 ausgebildet ist.

13. Filtereinrichtung nach Anspruch 12, **dadurch**
**gekennzeichnet, dass** die Filtereinrichtung (1) einen Abstreifer (9) für Filterrückstände (25) aufweist, der außenseitig oder innenseitig am Umfang des rohrförmigen Filtersiebs (4) angeordnet ist, und dass bevorzugt die Filtereinrichtung (1) eine mit dem Abstreifer (9) zusammenwirkende Austragvorrichtung (10) für die abgestreiften Filterrückstände (25) aufweist.

14. Verfahren zur Herstellung eines Filtersieb (4) für einen Rohrfilter (2), ausgebildet zur Filterung von Flüssigkeiten, insbesondere Kunststoffschmelzen (24), wobei das rohrförmige, insbesondere hohle kreiszylindrische, Filtersieb (4) aus einem flachen Siebzuschnitt (19) gebogen wird, wobei das Filtersieb (4) eine Filterachse (3) und eine vom Siebzuschnitt (19) gebildete Siebwandung (11) aufweist, und wobei die Siebwandung (11) am Umfang einen Perforationsbereich (13) mit dicht gepackten, feinen Durchgangsöffnungen (14) sowie ein mit axialer Richtungskomponente ausgerichtetes Verbindungsmittel (17), insbesondere in Form einer Schweißnaht, aufweist, **dadurch**
**gekennzeichnet, dass** der Perforationsbereich (13) im flachen Siebzuschnitt (19) eingebracht wird und in Umfangsrichtung beidseits unter Bildung eines Distanzbereichs (18) mit Abstand vor dem Verbindungsmittel (17) endet, wobei der dem Verbindungsmittel (17) jeweils benachbarte Bereichsrand (15) des Perforationsbereichs (13) in seinem axialen Verlauf eine Profilgeometrie (16) mit variierenden Randabständen (a1,a2) von dem Verbindungsmittel (17) aufweist, wobei die Profilgeometrie (16) in Umfangsrichtung gesehen eine Profiltiefe (t) aufweist, die ein Vielfaches der Durchmesser der Durchgangsöffnungen (14) beträgt.

15. Verfahren zur Herstellung einer gefilterten Flüssigkeit, insbesondere Kunststoffschmelze (24), unter Verwendung eines Filtersiebs (4) nach einem der Ansprüche 1 bis 7, wobei eine mit herausfilterbaren Partikeln behaftete rohe Flüssigkeit, insbesondere Kunststoffschmelze (24'), dem Filtersieb (4) zugeführt und nach Durchströmen des Filtersiebs (4) als gefilterte Flüssigkeit, insbesondere Kunststoffschmelze (24), vom Filtersieb (4) abgeführt wird.

## Geänderte Patentansprüche

### Geänderte Patentansprüche gemäss Regel 137(2) EPÜ.

1. Filtersieb für einen Rohrfilter (2), ausgebildet zur Filterung von Kunststoffschmelzen (24), wobei das rohrförmige, insbesondere hohle kreiszylindrische, aus einem flachen Siebzuschnitt (19) gebogene Filtersieb (4) eine Filterachse (3), eine Siebwandung (11), und am Umfang der Siebwandung (11) einen Perforationsbereich (13) mit dicht gepackten, feinen Durchgangsöffnungen (14) sowie ein mit axialer Richtungskomponente ausgerichtetes Verbindungsmittel (17) in Form einer Schweißnaht aufweist, wobei der Perforationsbereich (13) in Umfangsrichtung an beiden Enden jeweils einen mit axialer Richtungskomponente erstreckten Bereichsrand (15) aufweist, wobei die Bereichsränder (15) jeweils unter Bildung eines Distanzbereichs (18) mit Abstand vor dem Verbindungsmittel (17) enden und wobei zumindest ein Bereichsrand (15) in seinem axialen Verlauf eine Profilgeometrie (16) mit variierenden Randabständen (a1,a2) von dem benachbarten Verbindungsmittel (17) aufweist, wobei die Profilgeometrie (16) in Umfangsrichtung gesehen eine Profiltiefe (t) aufweist, die ein Vielfaches der Durchmesser der Durchgangsöffnungen (14) beträgt.

2. Filtersieb nach Anspruch 1, dadurch **gekennzeichneeet**, dass die Profilgeometrie (16) mindestens eine zum Verbindungsmittel (17) hin weisende Ausbuchtung (16') und/oder mindestens eine vom Verbindungsmittel (17) weg weisende Einbuchtung (16") aufweist.

3. Filtersieb nach Anspruch 1 oder 2, **dadurch gekennzeichnet, dass** in einer zum Verbindungsmittel (17) hin weisenden Ausbuchtung (16') mehrere Durchgangsöffnungen (14) in Umfangsrichtung hintereinander und nebeneinander angeordnet sind.

4. Filtersieb nach einem der vorhergehenden Ansprüche, **dadurch gekennzeichnet, dass** die Profilgeometrie (16) eine bevorzugt gleichmäßige, insbesondere mäandrierende, Wellenform mit mehreren zum Verbindungsmittel (17) hin weisenden Ausbuchtungen (16') und mehreren vom Verbindungsmittel (17) weg weisende Einbuchtungen (16") aufweist, wobei bevorzugt die Profilgeometrie (16) gerundete und/oder eckige Ausbuchtung(en) (16') und/oder Einbuchtung(en) (16") aufweist und wobei bevorzugt der Distanzbereich (18) zwischen dem Bereichsrand (15) und dem Verbindungsmittel (17) massiv ausgebildet ist.

5. Filtersieb nach einem der vorhergehenden Ansprüche, **dadurch gekennzeichnet, dass** die Siebwandung (11) eine Dicke zwischen 1,0 mm und 2,0 mm aufweist, wobei bevorzugt die Durchgangsöffnungen (14) jeweils einen Durchmesser zwischen 30 µm und 1.500 µm, bevorzugt zwischen 60 µm und 1.000 µmm, aufweisen.

6. Filtersieb nach einem der vorhergehenden Ansprüche, **dadurch gekennzeichnet, dass** die Siebwandung (11) aus einem ebenen, biegeelastischen Metallblech (23) ausgebildet ist.

7. Filtersieb nach einem der vorhergehenden Ansprüche, **dadurch gekennzeichnet, dass** am Verbindungsmittel (17) in Umfangsrichtung bevorzugt gerade Zuschnittsränder (20) des gebogenen Siebzuschnitts (19) stumpf gestoßen sind.

8. Siebzuschnitt ausgestaltet zur Bildung der Siebwandung (11) eines gebogenen Filtersiebs (4) für einen Rohrfilter (2), **dadurch**
**gekennzeichnet, dass** der flach und biegeelastisch ausgebildete Siebzuschnitt (19) einen Perforationsbereich (13) mit Durchgangsöffnungen (14) und Bereichsrändern (15) aufweist, der gemäß einem der Ansprüche 1 bis 7 ausgebildet ist.

9. Siebzuschnitt nach Anspruch 8, **dadurch gekennzeichnet, dass** der Siebzuschnitt (19) als bevorzugt rechteckiges, ebenes, biegeelastisches Metallblech (23) ausgebildet ist.

10. Rohrfilter ausgebildet zur Filterung von Kunststoffschmelzen (24), mit einem Filtersieb (4), **dadurch gekennzeichnet, dass** das Filtersieb (4) nach einem der Ansprüche 1 bis 7 ausgebildet ist.

11. Rohrfilter nach Anspruch 10, **dadurch gekennzeichnet, dass** der Rohrfilter (2) einen Filterträger (5) umfasst, an dem das Filtersieb (4) bevorzugt umfangseitig angeordnet ist, wobei bevorzugt der Filterträger (5) als rotierfähige Filterwelle ausgebildet ist.

12. Filtereinrichtung ausgebildet zur Filterung von Kunststoffschmelzen (24), wobei die Filtereinrichtung (1) einen Rohrfilter (2) mit einem rohrförmigen, insbesondere hohlen kreiszylindrischen, Filtersieb (4) aufweist, **dadurch gekennzeichnet, dass** das Filtersieb (4) nach einem der Ansprüche 1 bis 7 und der Rohrfilter (2) nach einem der Ansprüche 10 oder 11 ausgebildet ist.

13. Filtereinrichtung nach Anspruch 12, **dadurch gekennzeichnet, dass** die Filtereinrichtung (1) einen Abstreifer (9) für Filterrückstände (25) aufweist, der außenseitig oder innenseitig am Umfang des rohrförmigen Filtersiebs (4) angeordnet ist, und dass bevorzugt die Filtereinrichtung (1) eine mit dem Abstreifer (9) zusammenwirkende Austragvorrichtung (10) für die abgestreiften Filterrückstände (25) aufweist.

14. Verfahren zur Herstellung eines Filtersieb (4) für einen Rohrfilter (2), ausgebildet zur Filterung von Kunststoffschmelzen (24), wobei das rohrförmige, insbesondere hohle kreiszylindrische, Filtersieb (4) aus einem flachen Siebzuschnitt (19) gebogen wird, wobei das Filtersieb (4) eine Filterachse (3) und eine vom Siebzuschnitt (19) gebildete Siebwandung (11) aufweist, und wobei die Siebwandung (11) am Umfang einen Perforationsbereich (13) mit dicht gepackten, feinen Durchgangsöffnungen (14) sowie ein mit axialer Richtungskomponente ausgerichtetes Verbindungsmittel (17) in Form einer Schweißnaht aufweist, wobei der Perforationsbereich (13) im flachen Siebzuschnitt (19) eingebracht wird und in Umfangsrichtung beidseits unter Bildung eines Distanzbereichs (18) mit Abstand vor dem Verbindungsmittel (17) endet, wobei der dem Verbindungsmittel (17) jeweils benachbarte Bereichsrand (15) des Perforationsbereichs (13) in seinem axialen Verlauf eine Profilgeometrie (16) mit variierenden Randabständen (a1,a2) von dem Verbindungsmittel (17) aufweist, wobei die Profilgeometrie (16) in Umfangsrichtung gesehen eine Profiltiefe (t) aufweist, die ein Vielfaches der Durchmesser der Durchgangsöffnungen (14) beträgt.

15. Verfahren zur Herstellung einer gefilterten Kunststoffschmelze (24), unter Verwendung eines Filtersiebs (4) nach einem der Ansprüche 1 bis 7, wobei eine mit herausfilterbaren Partikeln behaftete rohe Kunststoffschmelze (24'), dem Filtersieb (4) zugeführt und nach Durchströmen des Filtersiebs (4) als gefilterte Kunststoffschmelze (24), vom Filtersieb (4) abgeführt wird.
